# EUROPEAN PATENT APPLICATION

(11) **EP 1 224 991 A1**
(43) Date of publication of application: **24.07.2002**
(21) Application number: 02001054.2
(22) Date of filing: 21.01.2002
(51) Int. Cl.: B23B 13/12

(54) **Device for transferring bars from a magazine into the guiding channel of a feeder**

(30) Priority: 23.01.2001 IT BO010028
(71) Applicant: IEMCA Giuliani Macchine Italia S.p.A., 48018 Faenza (Ravenna) (IT)
(72) Inventor: Drei, Andrea, 48018 Faenza (Ravenna) (IT); Ravaioli, Silvano, 48018 Faenza (Ravenna) (IT)
(74) Representative: Modiano, Guido, Dr.-Ing.

(57) **Abstract**

A device for transferring bars from a magazine into the guiding channel of a feeder for feeding a machine tool, the magazine comprising an inclined surface (16) for supporting the bars (B) having a side for unloading bars (B) into the channel (5), adjusters (29,33,35) for adjusting inclination of the supporting surface (16), elements (21) for retaining bars (B) on the surface (16), and bar pickers (40) which are actuated to disengage the lowermost bar (B1) from the retention elements (21) and move it to a level for falling into the channel (5), and actuators (26,27,28) for simultaneously actuating the adjusters (29,33,35) and the retention elements (21) for inclination and position adjustments suitable to accommodate variations in the diameter of the bars to be transferred.

## Description

The present invention relates to a device for transferring bars from a magazine into the guiding channel of a feeder for feeding a machine tool.

It is known that a bar magazine for the above indicated purpose comprises an inclined surface on which the bars that arrive from an appropriately provided feeder are deposited and arranged next to one another.

Means are associated with the inclined surface which separate the last bar (the lowermost one) and transfer it into the guiding channel, along which appropriate pushers make it advance toward the machine tool.

However, known magazines do not allow rapid adjustment of the means designed to individually pick and unload the bars into the guiding channel according to their diameter, and therefore when it is necessary to feed bars of different diameters it is necessary to perform rather labor-intensive operations that can be carried out by specialized personnel.

The aim of the present invention is therefore to provide a device that allows to act simultaneously on the means for individually picking and unloading the bars into the guiding channel in order to modify their configuration and parameters according to the diameter of the bars.

Within this aim, an object of the present invention is to provide a device that is constructively simple and therefore inexpensive and reliable in operation, also in view of the rough treatment to which such devices are subjected due to the weight of the bars and to the mechanical stresses.

This aim and this and other objects which will become better apparent hereinafter are achieved with a device for transferring bars from a magazine into the guiding channel of a feeder for feeding a machine tool, said magazine comprising an inclined surface for supporting the bars which has a side for unloading the bars into said channel, characterized in that it comprises means for adjusting the inclination of said supporting surface, elements for retaining the bars on said surface which are suitable to affect the lowermost bar, and means for individually picking said bars which are actuated so as to disengage said lowermost bar from said retention elements and move it to a level for falling into said channel, means being provided for simultaneously actuating said adjustment means and said retention elements so as to vary the inclination of the supporting surface and the position of the retention elements in order to adapt them to the variation in the diameter of the bars to be transferred.

Further characteristics and advantages of the present invention will become better apparent from the following description of a preferred embodiment thereof, illustrated only by way of non-limitative example in the accompanying drawings, wherein:
Figure 1 is a perspective view of a bar feeder;
Figure 2 is a plan view of the feeder of Figure 1;
Figure 3 is a side view, taken along the line III-III of Figure 2, of the feeder preset for large-diameter bars;
Figure 3a is an enlarged view of a detail of the feeder as shown in Figure 3;

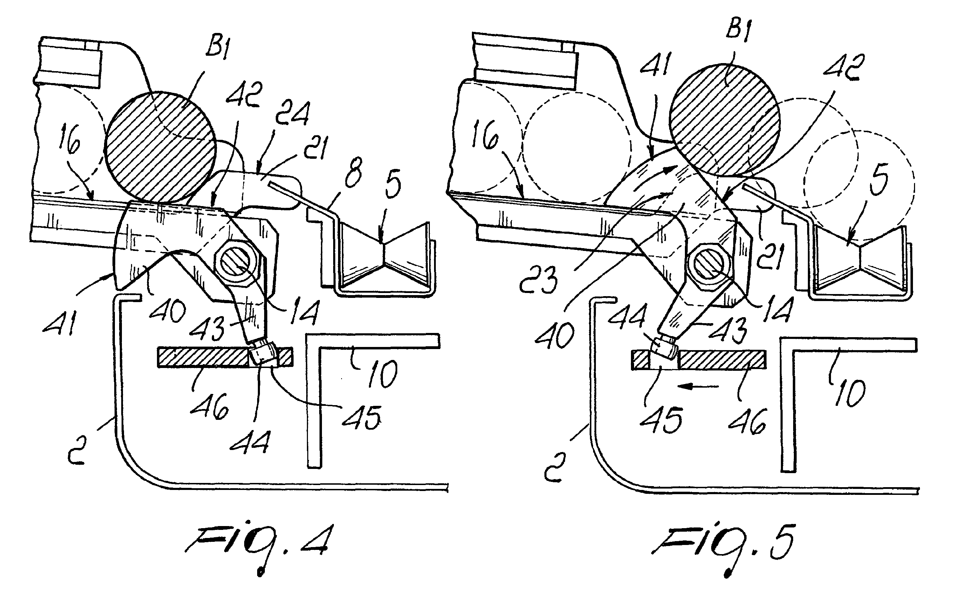

Figures 4 and 5 are views of the means for individually picking the bars in two operating positions;
Figure 6 is a side view of the feeder, preset for small-diameter bars;
Figure 6a is an enlarged view of a detail of the feeder as shown in Figure 6;
Figure 7 is a partially exploded perspective view of a different embodiment of inclination adjustment means.

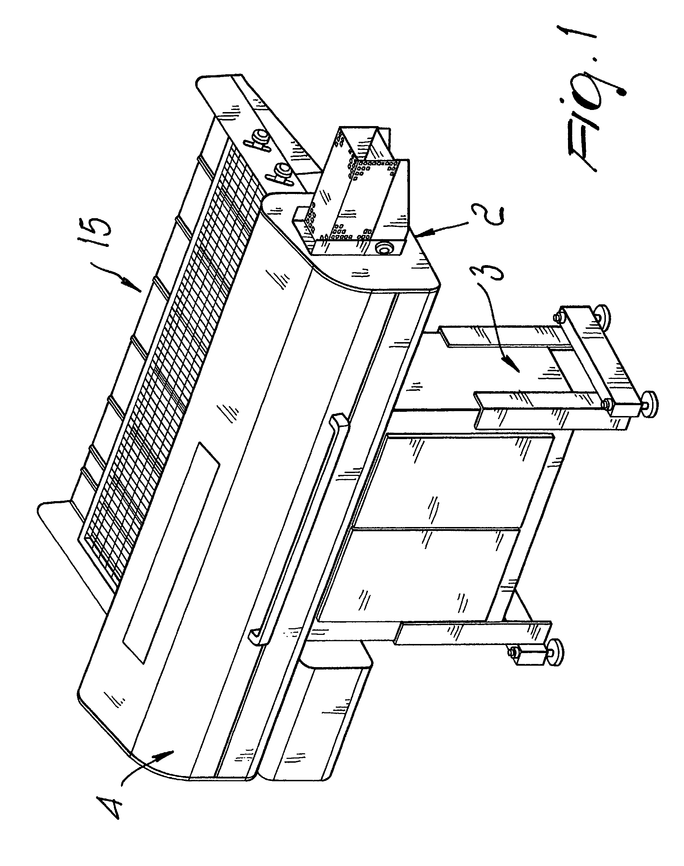

With reference to Figures 1 to 3, the reference numeral 1 designates a generic feeder, which comprises a U-shaped housing 2 mounted on a footing 3. The housing delimits a compartment which is closed by a cover 4 and accommodates the bar guiding channel 5 and the other elements for the advancement of the bars toward a machine tool. In the figures, the bar advancement elements are not shown, since they are beyond the scope of the present invention.

The bar guiding channel 5 is constituted by a plurality of rollers 6, rotatably supported in box-like elements 7 which have a U-shaped cross-section; a wing 8 is rigidly coupled to one edge of said box-like elements and acts as a chute for conveying the bars into the guiding channel 5.

The rollers 6 are shaped like an hourglass composed of two opposite frustums, which are tangent to two imaginary planes that give the guiding channel 5 a V-shaped cross-section, one of said planes being co-planar with respect to the chute 8.

The box-like elements 7 and the rollers 6 supported therein constitute modules 9, which are fixed on a longitudinal member 10 accommodated in the housing 2 and are mutually spaced by gaps 11.

Brackets 12 are fixed to the longitudinal member 10, and respective supports 13 are fixed to the top of said brackets. An articulation shaft 14 is supported within the supports 13 and allows the articulation of a shelf 15, which cantilevers out laterally from the housing 2 and defines a supporting surface 16 for a plurality of bars B to be transferred into the guiding channel 5.

Prism-shaped blocks 17 are fixed below the supporting surface 16 and are elongated at right angles to the shaft 14.

Two mushroom-shaped pins 18 protrude from a lateral face of said blocks 17 and slidingly engage a pair of slots 19, which are parallel to the surface 16 and are formed on sliders 20 which are kept adjacent to the blocks 17 by the heads of the pins 18.

The sliders 20 are aligned with the gaps 11 and comprise an extension 21, which is raised with respect to the surface 16 and is guided through slots 22 formed toward the side of the surface that is adjacent to the guiding channel 5 that constitutes the side for the exit or unloading of the bars with respect to the surface 16 into the channel 5.

The extensions 21 constitute bar retaining elements and are shaped so that their upper edge defines a shoulder 23 for retaining the bars B that descend along the surface 16 and a bridge 24 that lies above the edge of the chute 8 and allows to unload the bars into the channel 5. The edge of the shoulder 23 is rounded in order to blend with the edge of the bridge 24.

The sliders 20 are provided, on one side, with a pin 25, which engages between the prongs of a respective fork 26.

The forks 26 are keyed on a rod 27, which is parallel to the shaft 14 and is rotatably supported within ribs 27a are fixed below the surface 16.

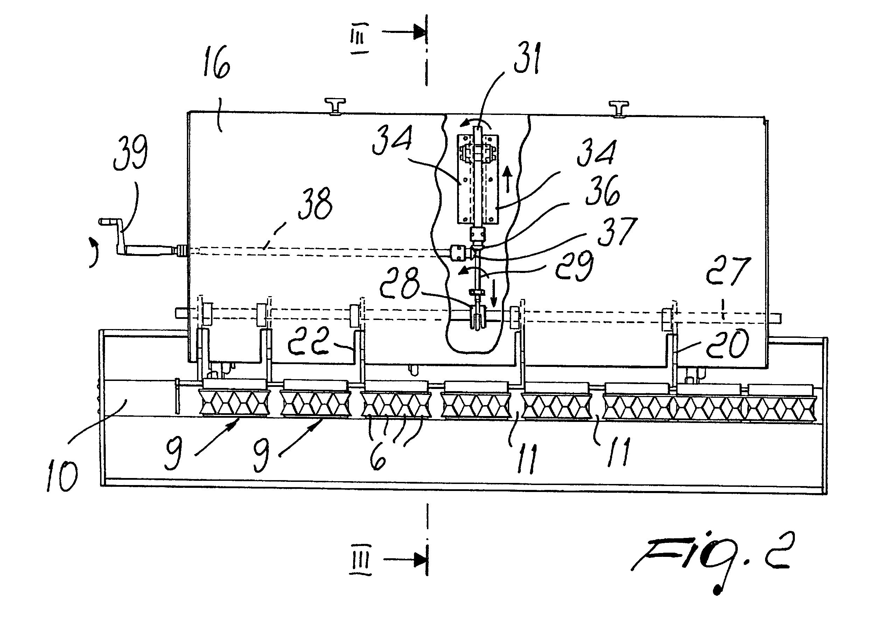

A radial lever is centrally rigidly coupled to the rod 27 and is constituted by an additional fork 28 (see Figure 2), to which the end of a stem 29 is connected; said stem 29 is perpendicular to the shaft 14. The stem 29 is guided in supports 30, so as to slide axially without turning.

A tubular screw 31 is coaxial to the stem 29, is provided with an inner thread and an outer thread, and can rotate within supports 32.

A threaded end of the stem 29 is screwed into the inner thread, and a female-thread sliding block 33 is screwed onto the outer thread and slides between a pair of guides 34, which are fixed below the surface 16. The inner and outer threads of the screw are provided, so that when the screw is turned the sliding block 33 and the stem 29 always move in opposite directions.

A strut 35 is articulated by way of its tip to the sliding block 33 and is articulated on the footing 3 by means of its lower end.

The screw 31 continues with a portion between the supports 32 and 30, and a first bevel gear 36 is keyed on said portion and meshes with a second bevel gear 37. Said bevel gear 37 is keyed on a shaft 28, which is supported below the surface 16 parallel to the rod 27 and can be actuated by means of a crank 39.

Inclination adjustment means for the surface 16 are thus provided.

When, by actuating the crank 39, the sliding block 33 and the stem 29 perform a translational motion toward each other, the strut 35 rotates toward a more vertical position, causing a steeper inclination of the surface 16. At the same time, the sliders 20 are retracted with respect to the guiding channel 5, in order to allow the adaptation of an individual picking device to act on bars B having a different diameter.

The individual picking device has picking means constituted by a plurality of levers 40, which are rotationally rigidly coupled to the shaft 14 at the slots 22.

The levers 40 are shaped like sectors, with a first arm having an edge 41 shaped like an arc that is concentric with respect to the shaft 14 and an edge 42 which is straight and, in an angular position of the lever, is co-planar with respect to the surface 16.

One of the levers 40 comprises a second arm 43, which protrudes downward and ends with a roller 44, which engages in the slot 45 of a cam 46 actuated by an actuator (not shown) in an axial direction, i.e., parallel to the shaft 14. The slot 45 is shaped so that by actuating the cam 46 the arm 43 performs an angular stroke which determines the oscillation of the levers 40 between a position in which the edge 42 is co-planar to the surface 16 and a position in which said edge 42 has substantially moved beyond the shoulder 23 of the sliders 20.

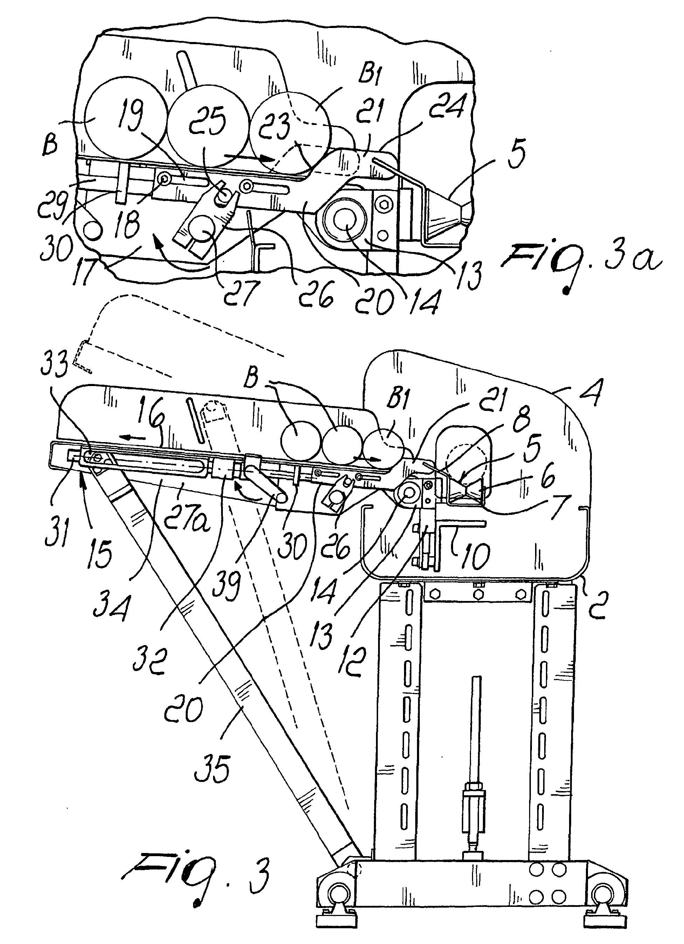

From the above description it is evident (see Figure 3) that in order to transfer large-diameter bars B from the magazine into the guiding channel, the shelf 15 is arranged so as to have a small angle with respect to the horizontal. In this manner, the component of the weight of the bars that acts against the bar B1 to be transferred into the guiding channel, i.e., against the lowermost bar, which abuts against the shoulder 23 of the sliders 20, is reduced.

At the same time, the sliders 20 are in a more advanced position, in order to allow the lower bar B1 to arrange itself on the lever 40 and remain adjacent to the shoulders 23.

By activating the cam 46, the levers 40 perform a rotational angle by means of which the bar B1 is raised on the edge 24 of the extensions 21, from which, by gravity or with the aid of pick-up elements, it is inserted in the guiding channel 5. It should be noted that while the bar B1 is lifted, the levers 40, with the arc-like edge 41, retain the remaining bars, releasing them only when the lever 40 has retracted completely below the surface 16.

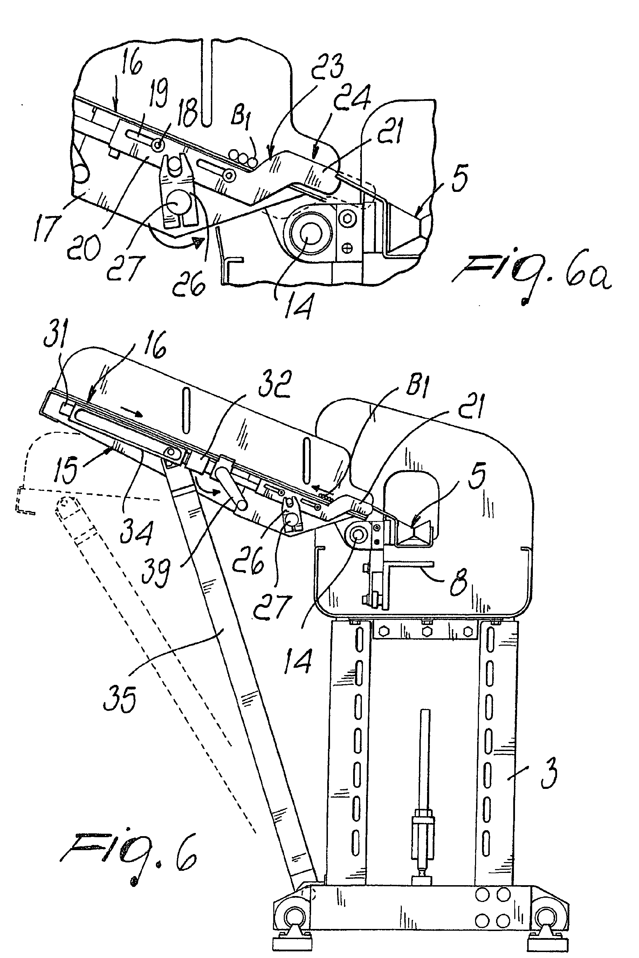

If the bars to be transferred into the guiding channel 5 have a small diameter (see Figure 6), the crank 39 is actuated in the direction in which the strut 35 assumes a more vertical position and the sliders assume a more retracted position with respect to the guiding channel. Accordingly, the surface 16 arranges itself at a steeper angle, which facilitates the descent of the bars against the shoulders 23, while the movement in the opposite direction of said shoulders reduces the length of the edge 41 that protrudes from the shoulders to a length that allows the levers 40 to lift only the lowermost bar.

It is evident from what has been described that the fundamental prerogative of the present invention is the fact that all the various operations required to adjust the device when the diameter of the bars varies are reduced to the actuation of a single crank and can therefore be performed very easily and rapidly.

The described device is susceptible of numerous modifications and variations, all of which are within the scope of the same appended claims. For example, instead of the crank it is possible to provide a motor assembly. Likewise, similar synchronized motor assemblies can be used to actuate the sliders 20 and the sliding block 33.

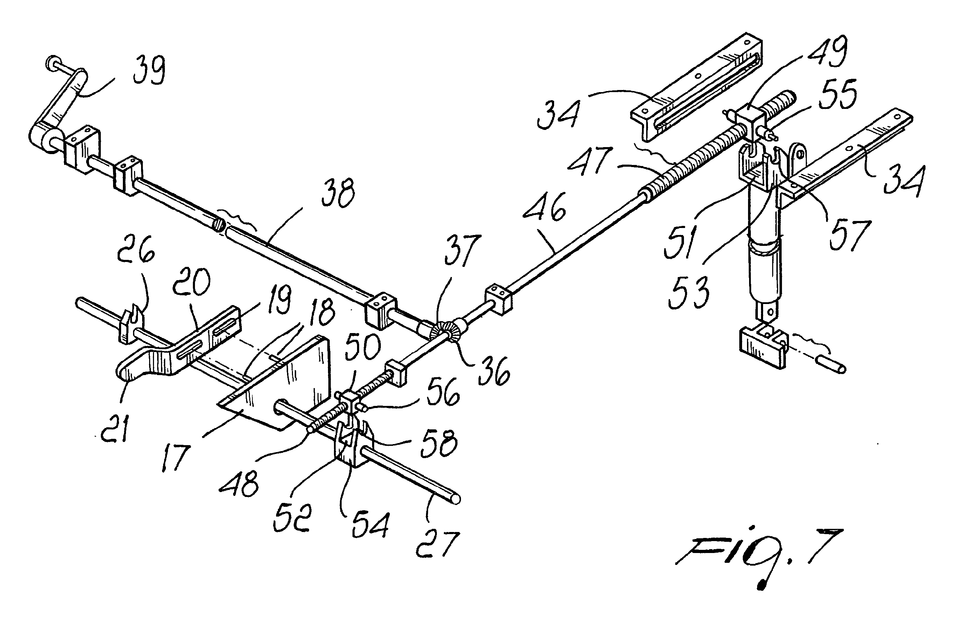

Another embodiment of the means for adjusting the supporting surface 16 and the sliders 20 is shown in Figure 7, in which the elements or parts that are similar to those of the above described example are designated by the same reference numerals.

The substantial difference with respect to the above described example is the fact that the shaft 38, actuated by the crank 39, by means of the pair of bevel gears 36 and 37, actuates a stem 29, which has a screw 47 at one end and, at the opposite end, a screw 48 whose thread is opposite to the thread of the screw 47. The screws 47, 48 are engaged in respective female-thread sliding blocks 49, 50, which are prism-shaped and accommodated in seats 51, 52 of a fork 53 and, respectively, of a fork-like lever 54, so as to be unable to rotate about the screws 47,48.

Furthermore, the sliding blocks 49, 50 are each provided with two coaxial pivots 55, 56, which are perpendicular to the screws 47, 48 and are articulated in slots 57, 58 of the forks 53, 54 so as to allow said forks to oscillate about the pivots 55, 56.

The forks 53, 54 are rigidly coupled to the top of the strut 35 and radially coupled to the rod 27, so that when the crank 39 is actuated, the screws 47, 48 move the sliding blocks 49, 50 mutually closer or further apart, inclining the surface 16 more or less steeply and moving the sliders 20 forward and backward.

The disclosures in Italian Patent Application No. BO2001A000028 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for transferring bars from a magazine into the guiding channel of a feeder for feeding a machine tool, said magazine comprising an inclined surface (16) for supporting the bars (B) which has a side for unloading the bars into said channel (5), **characterized in that** it comprises adjustments means (29,33,35) for adjusting the inclination of said supporting surface (16), retention elements (21) for retaining the bars (B) on said surface which are adapted to interact with the lowermost bar (B1), and picking means (40) for individually picking said bars (B) which are actuated so as to disengage said lowermost bar (B1) from said retention elements (21), and move the bar to a falling level for falling into said channel (5), actuation means (26,27,28) being provided for simultaneously actuating said adjustment means (29,33,35) and said retention elements (21,23) so as to vary the inclination of the supporting surface (16) and the position of the retention elements (21,23) in order to provide adaptation thereof to the variation in the diameter of the bars (B) to be transferred.

2. The device according to claim 1, **characterized in that** said actuation means (26,27,28) for simultaneously actuating said adjustment means (29,33,35) and said retention elements (21,23) are adapted to increase the inclination of the supporting surface (16) and to move the retention elements (21) closer to the guiding channel (5) when the diameter of the bars (B) to be transferred decreases and to decrease the inclination of the supporting surface (16) and move the retention elements (21,23) away from the guiding channel (5) when the diameter of the bars (B) to be transferred increases.

3. The device according to one of claims 1 and 2, **characterized in that** said supporting surface (16) is articulated about an axis (14) that is adjacent to said guiding channel (5), and **in that** sliders (20) can slide below said surface (16) transversely to said surface (16), said sliders (20) being provided with respective extensions (21) which are raised with respect to said supporting surface (16), so as to form shoulders (23) which constitute said retention elements, and **in that** said adjustment means for adjusting the inclination of the supporting surface (16) are constituted by a sliding block (33), which is guided below said surface (16) parallel to said sliders (20) and is articulately connected by a strut (35) to the footing (3) of the feeder (1), said actuation means (26,27,28) being adapted to actuate said sliding block (33) and said sliders (20) in opposite directions.

4. The device according to one of claims 1, 2 and 3, **characterized in that** said individual picking means are constituted by a plurality of levers (40) which oscillate about the articulation axis (14) of said supporting surface (16) and comprise a first arm (41,42), which has an edge (41) shaped like a concentric arc and a straight edge (42) that intersects said arc, and a second arm (43), which is controlled by a cam (46) which actuates said lever (40) between a position in which said straight edge (42) is co-planar to said supporting surface (16) and protrudes in front of said shoulders (23) by an extent that is not smaller than the radius of a bar (B), and a position in which said lever (40) engages the lowermost bar (B1), lifting it above said slider extension (21), while said arc-like edge (41) engages the remaining bars (B).

5. The device according to one or more of claims 2, 3 and 4, **characterized in that** said actuation means for actuating said sliders (20) comprise a rod (27) which is supported so that it can rotate about an axis that is parallel to said pivoting axis (14) of the bar supporting surface (16), a plurality of radial forks (26), which are keyed on said rod (27) and are engaged by pins (25) which are rigidly coupled to said sliders (20), and actuation means for actuating said rod (27), which act on a lever (28) which is radially rigidly coupled to said rod (27).

6. The device according to claim 5, **characterized in that** said actuation means comprise a stem (29) which is supported below said supporting surface (16) at right angles to said rod (27) and has, at its opposite ends, respective screws (47,48) which have mutually opposite threads engaged in female-thread sliding blocks (49,50), which are guided below said supporting surface (16) and are articulated in forks (53,54) coupled to said rod (27) and to said strut (35) so as to cause, by actuating said stem (29), mutually opposite movements of said sliding blocks (49,50).

7. The device according to claim 6, **characterized in that** said stem (29) is crank actuated by way of a transmission which comprises a bevel gear pair composed of a first gear (36), which is rigidly coupled to said stem (29) and meshes with a second gear (37), which is rigidly coupled to a shaft (38) provided with an actuation crank (39) and supported below said supporting surface (16).
